# EUROPÄISCHE PATENTSCHRIFT

(11) **EP 0 219 121 B1**
(45) Veröffentlichungstag und Bekanntmachung des Hinweises auf die Patenterteilung: **29.12.1993**
(21) Anmeldenummer: 86114279.2
(22) Anmeldetag: 15.10.1986
(51) Int. Cl.: G06F 15/16, G05B 19/417, G05B 19/403

(54) **Verfahren und Steuersystem zur Steuerung diskontinuierlicher Prozesse**
Method and system for controlling discontinuous processes
Méthode et système pour commander des procédés discontinus

(30) Priorität: 15.10.1985 DD 281720; 15.10.1985 DD 281721
(43) Veröffentlichungstag der Anmeldung: 22.04.1987
(73) Patentinhaber: SIEMENS AKTIENGESELLSCHAFT, 80333 München (DE)
(72) Erfinder: Geilert, Helmut, Dipl.-Ing., DD-9044 Karl-Marx-Stadt (DD); Hess, Karl, Dr., DD-9050 Karl-Marx-Stadt (DD); Hormes, Andreas, Dipl.-Ing., DD-9040 Karl-Marx-Stadt (DD); Kehrer, Eberhard, Dipl.-Ing., DD-9071 Karl-Marx-Stadt (DD)

(56) Entgegenhaltungen:
- EP-A- 0 074 659
- EP-A- 0 107 453
- EP-A- 0 125 776
- EP-A- 0 132 069
- FR-A- 2 346 757
- WERKSTATTSTECHNIK. ZEITSCHRIFT FÜR INDUSTRIELLE FERTIGUNG, Band 73, Nr. 12, Dezember 1983, Seiten 749-753, Springer Verlag, Würzburg, DE; A. HERRSCHER: "Numerische Steuerung eines Sechsspindel-Drehautomaten"

## Beschreibung

Die Erfindung betrifft ein Verfahren sowie ein aus Teilsystemen aufgebautes und in Hierarchieebenen geordnetes Steuersystem bzw. eine entsprechende Schaltungsanordnung zur Steuerung diskontinuierlicher Prozesse zur laufenden Anpassung der inneren Informationsverarbeitung an veränderliche Prozeßbedingungen. Dabei bestehen die in Hierarchieebenen angeordneten Teilsysteme aus als Steuermoduln arbeitenden Problemlösungs-Mastereinheiten und diesen nachgeordneten, als Verarbeitungsmoduln wirkenden prozeßsteuernden Slaveeinheiten. Solche Steuersysteme finden in automatisierten Be- und Verarbeitungsprozessen, die sich in eine Vielzahl von simultan zu behandelnden Abläufen gliedern, die wiederum aus Einzelaufgaben und Prozeßteilen bestehen, Anwendung. Neben der Wirkung auf die Ausführung der Einzelaufgaben ist dabei die innere Informationsverarbeitung für den Gesamtbetrieb ständig zu koordinieren und den veränderten Bedingungen anzupassen.

Es ist bereits eine Schaltungsanordnung für ein hierarchisches Steuersystem bekannt (DD-PS 219 978), das eine Mastereinheit aufweist, die aus einer Generatoreinheit, einer Koordinatoreinheit und einem Variablenspeicher, die über ein Bussystem untereinander verbunden sind, besteht. An dem Bussystem sind ein periphere Eingabeeinheiten ankoppelnden erstes Interface, ein an Prozeßsignalausgänge angeschlossenes zweites Interface sowie Prozeßteile oder Einzelprozesse steuernde Slaveeinheiten angeschlossen. Die Koordinatoreinheit besteht aus einer Koordinatorsteuereinheit, die über ein Koordinatorinterface an das Bussystem angeschlossen ist. Durch die Koordinatoreinheit wird die Arbeitsweise der Slaveeinheiten anhand der im Variablenspeicher abgelegten Bearbeitungsregeln gesteuert. Die Generatoreinheit erteilt aus Prozeßsignalen und von den peripheren Eingabeeinheiten eingegebenen Informationen Bearbeitungsregeln und legt diese im Variablenspeicher ab, wodurch die Arbeitsweise des Gesamtsystems ständig gemäß den Prozeßrückmeldesignalen und Eingaben von den peripheren Geräten aktualisiert wird.

Die Mastereinheit muß sich bei häufigen Eingaben ständig selbst umorganisieren, um dann mit dem gewonnenen Ergebnis Vorgaben für die Slaveeinheiten zu ermitteln. Damit ist die Mastereinheit stark mit internen Aufgaben belastet. Es sind sowohl die Mastereinheit für ihre Vorgaben an die Slaveeinheiten als auch die Slaveeinheiten in der Bearbeitung ihrer Aufgaben an eine sequentielle Betriebsweise gebunden. Außerdem wird der interne Ablauf durch die zweiphasige Arbeitsweise der Generierung und Koordinierung im Gesamtsystem kompliziert.

Es ist weiterhin bekannt, Datenverarbeitungssysteme dezentral und modular aus einer Anzahl selbständiger, gleichberechtigter Rechner-Module und einer beliebigen Anzahl selbständiger gleichberechtigter Peripherie-Module aufzubauen. Jeder Modul enthält einen Prozessor und Speicher an einem lokalen Bus. Die Rechner-Module sind in der Lage, durch Interpretieren von Programmsprachen Anwender- und Dienstleistungsprogramme abzuarbeiten, und die Peripherie-Module führen Ein-/Ausgabebefehle aus. Alle Rechner-Module sind über ein übergeordnetes Bussystem an einen Hauptspeicher angeschlossen und untereinander verbunden. Jeder Modul ist zur Bearbeitung von für ihn bestimmten Aufgaben befähigt. Andere Aufgaben, die ein Modul nicht bearbeiten kann, werden in einer Auftragssprache über das übergeordnete Bussystem an einen geeigneten Modul übertragen. Durch die modulare Auf- und Abrüstbarkeit des Systems ist ein auf die zu bearbeitenden Aufgaben bezogener Aufbau möglich (DE-OS 31 12 693).

Die Modularität im Aufbau eines solchen Systems erfordert eine den anfallenden Aufgaben entsprechende Anzahl von dafür spezialisierten Moduln. Eine Verteilung der Aufgaben, um eine möglichst gleichmäßige Auslastung der Module zu erreichen, kann von der Anlage selbst nicht organisiert werden. Ebenso können von einem festliegenden Spektrum abweichende Aufgaben nicht gelöst werden.

Es ist Aufgabe der Erfindung, ein Verfahren sowie ein hierarchisches Steuersystem der eingangs genannten Art anzugeben, mit denen eine weitestgehende Flexibilität der internen Verarbeitung und eine optimale Anpaßfähigkeit an veränderliche Prozeßgrößen und Prozeßbedingungen erreicht werden.

Die Aufgabe wird anspruchsgemäß gelöst. Vorteilhafte Ausführungsformen sind Gegenstand der abhängigen Ansprüche.

Das erfindungsgemäße Verfahren zur hierarchischen Steuerung diskontinuierlicher Prozesse zur laufenden Anpassung der inneren Informationsverarbeitung an veränderliche Prozeßbedingungen beruht auf der Verwendung von in Hierarchieebenen angeordneten Teilsystemen aus Steuermoduln und in der nachgeordneten Hierarchieebene als Verarbeitungsmoduln wirkenden Funktionseinheiten und zugeordneten Eingabeschnittstellen, und ist dadurch gekennzeichnet, daß in jedem Steuermodul der untersten Hierarchieebene aus Programmvorgaben und Prozeßinformationen Steuervariable, Bedingungen und Strukturinformationen ermittelt und in einem Speicher abgelegt und anhand dieser Informationen Bearbeitungsanweisungen für die dem Steuermodul nachgeordneten, von dem Steuermodul der nächsthöheren Hierarchieebene ausgewählten und aktivierten Verarbeitungsmoduln bereitgestellt werden, und in einer Programmiersprache über ein Belehrungsinterface eingegebene, problembezogene Informationen von dem Steuermodul der höchsten Hierarchieebene aufbereitet und den Steuermoduln der ihr nachgeordneten Hierarchieebenen als Verarbeitungsregeln vorgegeben werden.

Die erfindungsgemäße Vorrichtung stellt eine Schaltungsanordnung eines hierarchischen Steuersystems für diskontinuierliche Prozesse zur laufenden Anpassung der inneren Informationsverarbeitung an veränderliche Prozeßbedingungen dar, das Hierarchieebenen zugeordnete Teilsysteme aus Steuermoduln und Verarbeitungsmoduln und in jeder Hierarchieebene zugeordneten Eingabeschnittstellen aufweist; sie ist dadurch gekennzeichnet, daß eine Problemverwaltungs-Mastereinheit als weitere Hierarchieebene den aus Problemlösungs-Mastereinheit und Slaveeinheiten bestehenden Systemen an einem gemeinsamen Bussystem übergeordnet ist.

Gemäß einer vorteilhaften Ausführungsform sind in einer weiteren übergeordneten Hierarchieebene an dem gemeinsamen Bussystem eine Problemaufbereitungs-Mastereinheit und ein zur Eingabe einer Programmiersprache bestimmtes Belehrungsinterface angeschlossen.

Mit dieser Lösung ist ein variables Steuersystem zur simultanen Bearbeitung von parallel ablaufenden Prozessen oder Prozeßteilen geschaffen, das in seinem internen Verarbeitungsablauf optimal modifikationsorientiert und an veränderliche Bedingungen anpassungsfähig ist.

Die Erfindung wird nachstehend an einem Ausführungsbeispiel einer Werkzeugmaschinensteuerung anhand der Zeichnungen näher erläutert; es zeigen:
- Fig. 1:: Den prinzipiellen Aufbau eines erfindungsgemäßen hierarchischen Steuersystems,
- Fig. 2:: ein Blockschaltbild der erfindungsgemäßen Schaltungsanordnung,
- Fig. 3:: ein Blockschaltbild für eine Problemverwaltungs-Mastereinheit,
- Fig. 4:: ein Blockschaltbild für eine Problemaufbereitungs-Mastereinheit sowie
- Fig. 5:: eine Kopplungsanordnung für mehrere Steuersysteme.

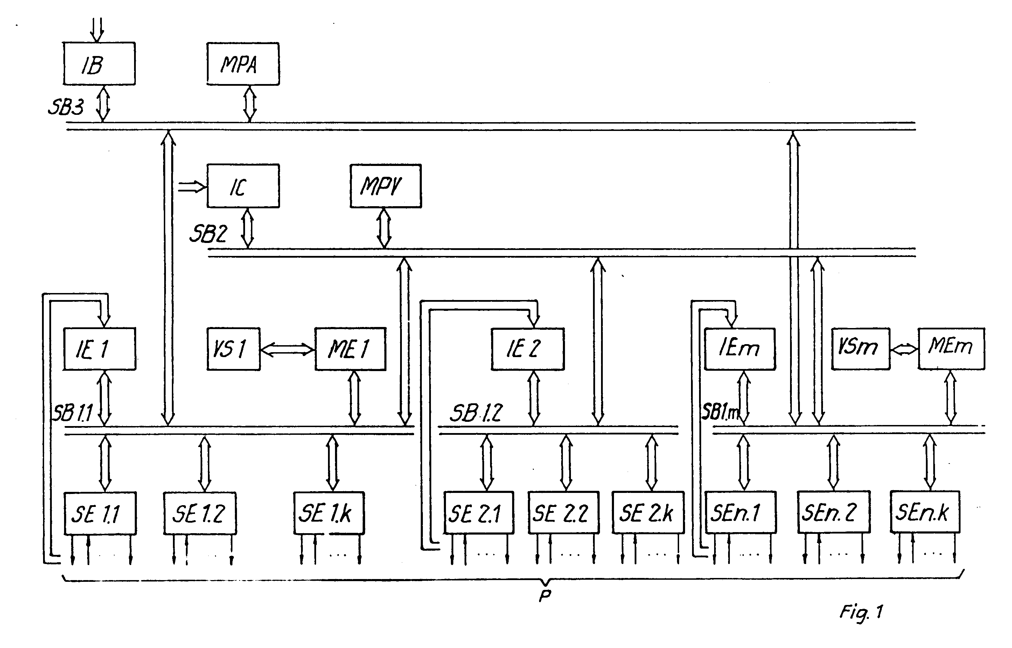

In Fig. 1 sind in der untersten Hierarchieebene zur Steuerung von Einzel- oder Teilprozessen Bussysteme SB 1.1 bis SB 1.m mit daran angeschlossenen Verarbeitungseinheiten SE 1.1 bis SE n.k dargestellt. Diesen Verarbeitungseinheiten SE 1.1 bis SE n.k sind Steuereinheiten ME 1 bis ME m mit je einem Variablenspeicher VS 1 bis VS m für Verarbeitungsregeln an den betreffenden Bussystemen SB 1.1 bis SB 1.m übergeordnet. Für gleichberechtigt parallel ablaufende Vorgänge mit einem begrenzten Bearbeitungsumfang sind die Verarbeitungseinheiten SE 2.1 bis SE 2.k am zweiten Bussystem SB 1.2 als selbständige, nach eigenen Bearbeitungsregeln arbeitende aktive Einheiten ausgebildet. Eingabe-Interfaces IE 1 bis IE m sind zur Einkopplung von Prozeßrückmelde- und Ausgabeinformationen der an dem jeweiligen Bussystem SB 1.1 bis SB 1.m angeschlossenen Verarbeitungseinheiten SE 1.1 bis SE n.k mit diesen Bussystemen SB 1.1 bis SB 1.m verbunden. Die Bussysteme SB 1.1 bis SB 1.m sind an ein übergeordnetes Bussystem SB 2 angeschlossen. Dieses Bussystem SB 2 und alle diesem untergeordneten Bussysteme SB 1.1 bis SB 1.m, die mit einer eigenen Steuereinheit ME 1 bis ME m ausgestattet sind, sind mit einem weiteren, diesen übergeordneten Bussystem SB 3 verbunden. Das Bussystem SB 2 der zweiten Hierarchieebene wird von einer Problemverwaltungs-Mastereinheit MPV verwaltet. An diesem Bussystem SB 2 ist ein Interface IC für externe Eingaben angeschlossen. An das Bussystem SB 3 der höchsten Hierarchieebene sind außer allen untergeordneten Bussystemen SB 1.1 bis SB 1.m, SB 2 eine Problemaufbereitungs-Mastereinheit MPA und ein Belehrungsinterface IB angeschlossen.

Von den Verarbeitungseinheiten SE 1.1 bis SE n.k werden anhand vorgegebener Bearbeitungsanweisungen und Prozeßrückmeldeinformationen Steuerinformationen für den Prozeß P, beispielsweise einen Vorgang zur spanenden Bearbeitung eines Werkstücks auf einer Werkzeugmaschine, ermittelt und ausgegeben. Für den Programmablauf notwendige Informationen werden für die Verarbeitungseinheiten SE 1.1 bis SE n.k von den unmittelbar übergeordneten Steuereinheiten ME 1 bis ME m zusammengestellt. Diese Steuereinheiten ME 1 bis ME m ermitteln diese Informationen aus Programminformationen, den über das am jeweiligen Bussystem SB 1.1 bis SB 1.m in dieser Hierarchieebene angeschlossene Eingabeinterface IE 1 bis IE m eingekoppelten Prozeßrückmeldeinformationen und den von den Verarbeitungseinheiten SE 1.1 bis SE n.k ausgegebenen und ebenfalls über das jeweilige Eingabeinterface IE 1 bis IE m auf das betreffende Bussystem SB 1 bis SB m eingekoppelten Steuerinformationen anhand der im Variablenspeicher VS 1 bis VS m gespeicherten Bearbeitungsregeln. Die weitere Behandlung der von den Steuereinheiten ME 1 bis ME m bereitgestellten Informationen durch eine der nachgeschalteten Verarbeitungseinheiten SE 1.1 bis SE 1.k, SE m.1 bis SE n.k wird eingeleitet, nachdem von der jeweiligen Steuereinheit ME 1 bis ME m der untersten Hierarchieebene ein die Bereitstellung solcher Informationen meldendes Signal an die Problemverwaltungs-Mastereinheit MPV gegeben wurde. Ausgelöst durch dieses Signal wird von der Problemverwaltungs-Mastereinheit MPV eine dafür geeignete Verarbeitungseinheit SE 1.1 bis SE n.k ausgewählt und für diese Aufgabe gemäß den übertragenen Informationen aktiviert. Verarbeitungseinheiten SE 2.1 bis SE 2.k , die an einem Bussystem SB 1.2, an dem keine Steuereinheit ME 1 bis ME m angeordnet ist, angeschlossen sind, lösen nach der Auswahl und Aktivierung durch die Problemverwaltungs-Mastereinheit MPV in der übergeordneten Hierarchieebene Aufgaben anhand ihres gespeicherten Bearbeitungsprogramms. Dadurch kann die Bearbeitung bestimmter Aufgaben, die keine Aktualisierung von Steuervariablen, Bedingungen und Strukturinformationen erfordern, erfolgen.

Zur Steuerung von Prozessen, deren Informationsbedarf über die anhand der in der Problemverwaltungs-Mastereinheit MPV und in den Variablenspeichern VS 1 bis VS m der Steuereinheiten ME 1 bis ME m gespeicherten Bearbeitungsregeln ermittelbaren Steuerinformationen hinausgeht oder von diesen abweicht, bedarf es neuer bzw. veränderter Bearbeitungsregeln. Dazu werden Informationen in einer Programmsprache über das Belehrungsinterface IB auf das höchstrangige Bussystem SB 3 eingegeben. Diese Eingabeinformationen werden von der Problemaufbereitungs-Mastereinheit MPA in von der Problemverwaltungs-Mastereinheit MPV und den Steuereinheiten ME 1 bis ME m in der niedrigsten Hierarchieebene verarbeitbare Regeln umgesetzt und an diese bzw. deren Variablenspeicher VS 1 bis VS m ausgegeben. Dadurch ist es möglich, Anpassungen an andere Prozesse oder Prozeßbedingungen vorzunehmen.

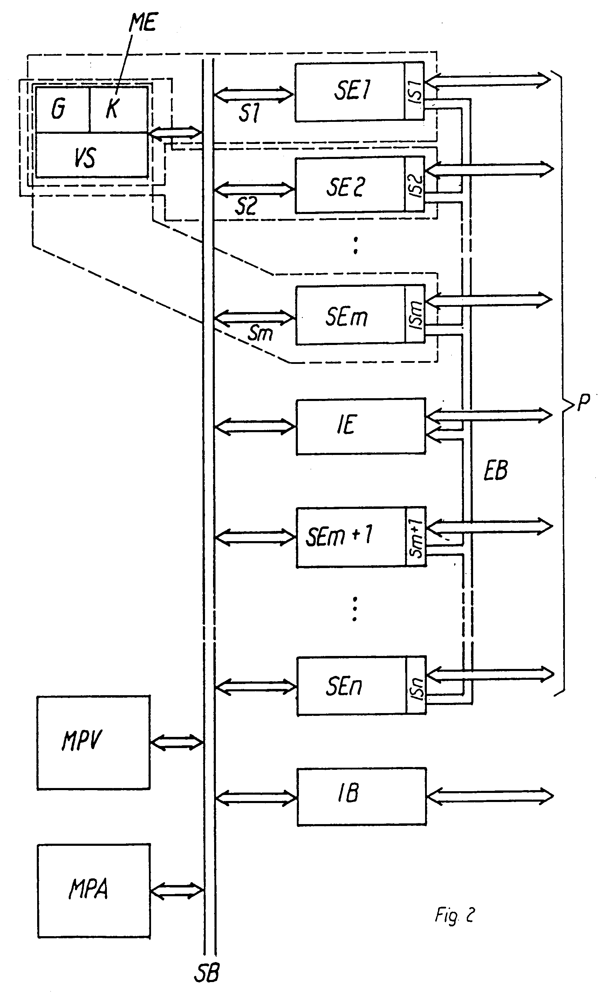

In Fig. 2 ist eine Problemlösungs-Mastereinheit ME an ein gemeinsames Bussystem SB angeschlossen. Die Problemlösungs-Mastereinheit ME besteht aus einer Koordinatoreinheit K, einer Generatoreinheit G und einem Variablenspeicher VS. In dem Variablenspeicher VS sind Steuervariablen, Bedingungen und Strukturinformationen für steuernde Systeme S 1 bis S m abgelegt. Die Koordinatoreinheit K steuert den routinemäßigen Ablauf, während die Generatoreinheit G aus Prozeßrückmeldesignalen und den im Variablenspeicher VS abgelegten Informationen neue Informationen gewinnt und diese wieder in dem Variablenspeicher VS als Steuervariable, Bedingungen und Strukturinformationen für die weitere Bearbeitung ablegt. Die steuernden Systeme S 1 bis S m werden aus je einer an dem gemeinsamen Bussystem SB angeschlossenen Slaveeinheit SE 1 bis SE m in Verbindung mit der Problemlösungs-Mastereinheit ME gebildet. Dabei ist die Problemlösungs-Mastereinheit ME die Steuereinheit und sind die Slaveeinheiten SE 1 bis SE n die Verarbeitungseinheiten in dieser Hierarchieebene. Jedes dieser Systeme S 1 bis S m steuert einen Einzelprozeß oder einen Teil eines umfangreichen Prozesses. Dazu sind die Ausgänge der Slaveeinheiten SE 1 bis SE m mit Prozeßsteuermitteln P verbunden. Zur Rückmeldung der Ausgabeinformationen der Slaveeinheiten SE 1 bis SE m sind Rückmeldeleitungen auf ein Eingabeinterface IE geführt. Auf dieses Eingabeinterface IE sind außerdem Rückmeldeinformationsleitungen von den Prozeßsteuermitteln P geführt. Für numerisch gesteuerte Werkzeugmaschinen werden auf diese Weise von Eingabemitteln, wie Handeingabetastaturen, eingegebene Informationen aufbereitet, beispielsweise Wegesteuerungs-und Lageregelungsabläufe erstellt sowie Schaltbefehlsinformationen verarbeitet und ausgegeben. Die Bedieneinheit einer numerischen Steuerung ist an eine der Slaveeinheiten SE 1 bis SE m angeschlossen, oder Teile der Bedieneinheit sind an verschiedene Slaveeinheiten SE 1 bis SE m angeschlossen. Andere Slaveeinheiten SE 1 bis SE m bilden den Wegesteuerungs-/-Lageregelungsteil der numerischen Steuerung und sind in Richtung auf den Prozeß mit den Antrieben, Wegmeßsystemen und Geschwindigkeitseinrichtungen der zu steuernden Werkzeugmaschine verbunden. Bei hohem Informationsbedarf ist es vorteilhaft, die Ein- und Ausgabe der Slaveeinheiten SE 1 bis SE n über jeweils ein Ein-/Ausgabeport eines Interfaces durchzuführen und die Rückmeldeinformationen der Slaveeinheiten SE 1 bis SE n über jeweils ein Ausgabeport und ein externes Bussystem EB auf jeweils ein Ausgabeport und ein externes Bussystem EB auf das Eingabeinterface IE zu führen. Neben den der Problemlösungs-Mastereinheit ME untergeordneten Slaveeinheiten SE 1 bis SE m sind an dem gemeinsamen Bussystem SB weitere, von der Problemlösungs-Mastereinheit ME unabhängige autonome Slaveeinheiten SE m+1 bis SE n angeschlossen. Von diesen autonomen Slaveeinheiten SE m+1 bis SE n werden nach feststehenden Bearbeitungsregeln zu behandelnde Schaltinformationen, wie die Abschaltung der Antriebe beim Auffahren eines Maschinentisches auf einen Endschalter, die Steuerung der Kühlmittelzufuhr oder Ereignisse, die eine Notabschaltung erfordern, abgearbeitet. An dem gemeinsamen Bussystem SB sind außerdem eine Problemverwaltungs-Mastereinheit MPV, als weitere Hierarchieebene zur Problemlösungs-Mastereinheit ME eine Problemaufbereitungs-Mastereinheit MPA und zur Eingabe von für den Betrieb des Gesamtsystems notwendigen Informationen in einer Programmsprache ein Belehrungsinterface IB angeordnet.

Die Slaveeinheiten SE 1 bis SE n bearbeiten ständig die Ein- und Ausgabeinformationen eines Teilprozesses oder eines Prozeßteiles. Über Ein- und Ausgabeleitungen korrespondieren die Slaveeinheiten SE 1 bis SE n mit den Prozeßsteuermitteln P. Über die auf das Eingabe-Interface IE geführten Rückmeldeleitungen gelangt ein Abbild der Ausgabeinformationen der Slaveeinheiten SE 1 bis SE n auf das gemeinsame Bussystem SB und damit an die Problemlösungs-Mastereinheit ME oder an die Problemverwaltungs-Mastereinheit MPV. Bei einem Informationsaustausch der Slaveeinheiten SE 1 bis SE n mit den Prozeßsteuermitteln P in einer größeren Datenbreite erfolgt dieser über die Interfaces IS 1 bis IS n, und die Ausgabeinformationen werden an das externe Bussystem EB und von diesem durch das Eingabe-Interface IE auf das gemeinsame Bussystem SB und damit an die Problemlösungs-Mastereinheit ME oder an die Problemverwaltungs-Mastereinheit MPV zurückgemeldet. Aus solchen Rückmeldeinformationen und aus Anforderungen der Slaveeinheiten SE 1 bis SE m über das gemeinsame Bussystem SB, die sich aus deren Bearbeitungszustand ergeben, ermittelt die Problemlösungs-Mastereinheit ME anhand von Programminformationen im Variablenspeicher VS neue Instruktionen für die Slaveeinheiten SE 1 bis SE m, die daraus Daten und Befehle für die Prozeßsteuermittel P ableiten. Aus dem über eine oder mehrere Slaveeinheiten SE 1 bis SE m eingegebene Bearbeitungsprogrammen und den über andere Slaveeinheiten SE 1 bis SE m gemeldeten Istwerten der Wegmeßsysteme und Geschwindigkeitsmeßeinrichtungen ermittelt die Problemlösungs-Mastereinheit ME Vorgaben für die Bewegungskurven der Bearbeitungswerkzeuge an der Maschine. Anhand der Dringlichkeiten der Informationen und der Belastung der steuernden Systeme S1 bis S n oder der autonomen Slaveeinheiten SE m+1 bis SE n weist die Problemverwaltungs-Mastereinheit MPV diesen für den laufenden Bearbeitungsprozeß zu bearbeitende Aufgaben oder Diagnoseroutinen entsprechend ihrem Funktionsumfang zu. Die Prozeßsteuermittel P können dabei durch die Problemverwaltungs-Mastereinheit MPV den Slaveeinheiten SE 1 bis SE n in weitestem Sinne frei zugeordnet werden. Dynamische, beispielsweise von dazu vorgesehenen Sensoren ermittelte Veränderungen und andere veränderliche Korrekturwerte, werden durch die Problemlösungs-Mastereinheit ME in Generierungszyklen für das laufende Programm aufbereitet. Damit wird das Bearbeitungsprogramm ständig aktualisiert. In gleicher Weise werden von der Problemlösungs-Mastereinheit ME die von der Tastatur der Bedieneinheit vorgegebenen Programminformationen in Generierungszyklen interpretiert und als Bearbeitungsinformationen aufbereitet und danach an die betreffenden Slaveeinheiten SE 1 bis SE m als Programminstruktionen oder als Eingabeanforderungen ausgegeben.

Die Rückmeldeinformationen der autonomen Slaveeinheiten SE m+1 bis SE n und der Bearbeitungszustand und der Informationsbedarf der Problemlösungs-Mastereinheit ME werden von der Problemverwaltungs-Mastereinheit MPV überwacht, die anhand ihrer gespeicherten Bearbeitungsregeln Programminstruktionen an diese Einheiten ausgibt, wobei eine Aufgabenverteilung erfolgt.

Über das Belehrungsinterface IB können in Form einer Programmsprache Steuervariable, Bearbeitungsregeln, Bedingungen und Strukturinformationen eingegeben werden, die von der Problemaufbereitungs-Mastereinheit MPA als Anweisungen für die Problemverwaltungs-Mastereinheit MPV, die Problemlösungs-Mastereinheit ME und die autonomen Slaveeinheiten SE m+1 bis SE n aufbereitet werden. Dadurch ist es möglich, das Steuersystem veränderten Bedingungen anzupassen oder zur Bearbeitung unterschiedlicher Programme und Aufgaben zu befähigen.

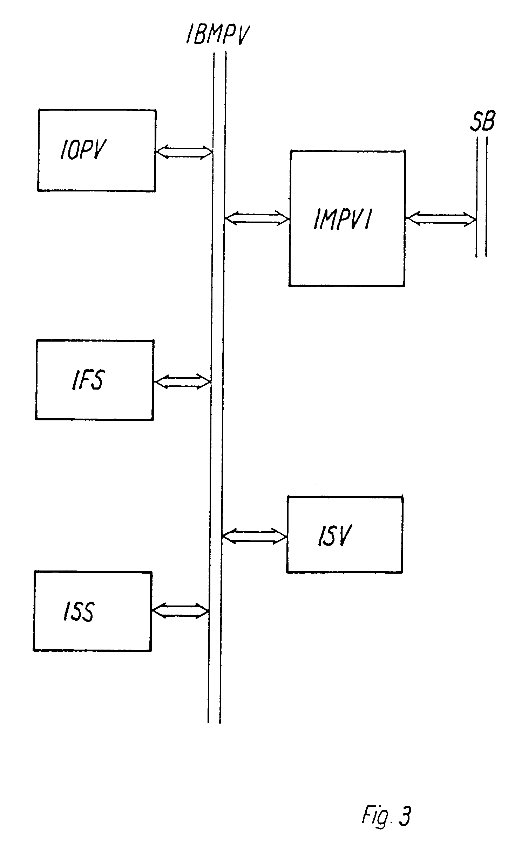

In Fig. 3 ist das Blockschaltbild einer Problemverwaltungs-Mastereinheit MPV gezeigt. An einem internen Bussystem IBMPV sind ein interner Funktionsspeicher IFS, ein interner Systemspeicher ISS, eine interne Problemverwaltungs-Operatoreinheit IOPV und zur Verbindung mit dem gemeinsamen Bussystem SB ein internes Interface IMPVI angeschlossen.

In dem internen Funktionsspeicher IFS sind universelle Koordinationsmöglichkeiten für alle am gemeinsamen Bussystem SB angeschlossenen Steuerungseinheiten in Gestalt der aus der Problemlösungs-Mastereinheit ME und den ihr untergeordneten Slaveeinheiten SE 1 bis SE m und der autonomen Slaveeinheiten SE m+1 bis SE n abgelegt. Mit diesen statischen Bedingungen ist es der internen Problemverwaltungs-Operatoreinheit IOPV möglich, nach dem dadurch festgeschriebenen Programm und aufgrund von Anforderungen der Steuerungseinheiten Anweisungen zur Bearbeitung von Aufgaben über das interne Interface IMPVI an diese auszugeben. Im Rahmen des im internen Funktionsspeicher IFS eingespeicherten Programms ist damit eine optimale Aufgabenverteilung möglich. In den internen Systemspeicher ISS können vom gemeinsamen Bussystem SB über das interne Interface IMPVI weitere Koordinationsmöglichkeiten für weitere Steuerungseinheiten, die im internen Funktionsspeicher IFS nicht berücksichtigt sind, eingegeben werden. Zur Einspeicherung und zum schnellen Zugriff, entsprechend der Speichersystematik im internen Funktionsspeicher IFS zum internen Systemspeicher ISS, werden die Informationen der erweiternden Koordinationsmöglichkeiten von dem internen Speicherverwalter ISV geordnet und die Einspeicherung und Abfrage gesteuert. Durch die Erweiterung der Koordinationsmöglichkeiten mit Hilfe des internen Systemspeichers ISS ist eine beliebige Erweiterung des gesamten Steuersystems möglich, die nur durch die Verarbeitungsgeschwindigkeit der Problemverwaltungs-Mastereinheit MPV begrenzt wird.

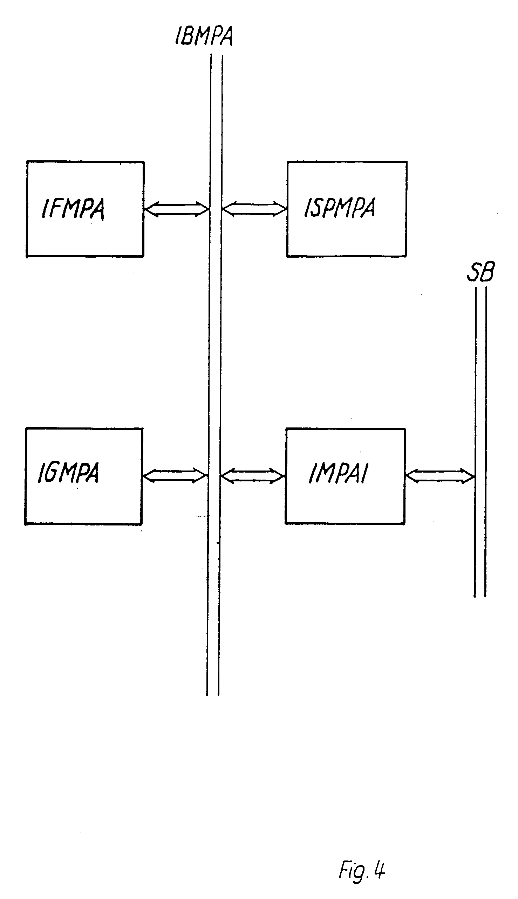

Die Fig. 4 zeigt das Blockschaltbild einer Problemaufbereitungs-Mastereinheit MPA. An einem internen Bussystem IBMPA sind eine Generatoreinheit IGMPA als aktive Einheit, ein interner Speicher ISPMPA, eine interne Filtereinheit IFMPA und zur Verbindung mit dem gemeinsamen Bussystem SB ein internes Interface IMPAI angeschlossen. Über das gemeinsame Bussystem SB ist die Problemaufbereitungs-Mastereinheit MPA mit dem Belehrungsinterface IB verbunden.

Die von dem Belehrungsinterface IB auf das gemeinsame Bussystem SB in Form einer Programmsprache eingegebenen Informationen werden durch das interne Interface IMPAI empfangen und auf das interne Bussystem IBMPA gegeben. Mit Hilfe der internen Filtereinheit IFMPA werden durch die interne Generatoreinheit IGMPA diese eingegebenen Informationen in koordinierende und aktionsausführende Elemente getrennt und danach als Steuervariable, Bedingungen und Strukturinformationen im internen Speicher ISPMPA abgelegt. Auf diese Weise werden neue Anweisungen für die Problemverwaltungs-Mastereinheit MPV und die Problemlösungs-Mastereinheit ME gewonnen, die von diesen in einer gesonderten Bearbeitungsroutine, in der die Problemaufbereitungs-Mastereinheit MPA mit der Problemverwaltungs-Mastereinheit MPV oder der Problemlösungs-Mastereinheit ME gekoppelt ist, übernommen und in deren interne Systemspeicher bzw. in den Variablenspeicher VS abgelegt werden.

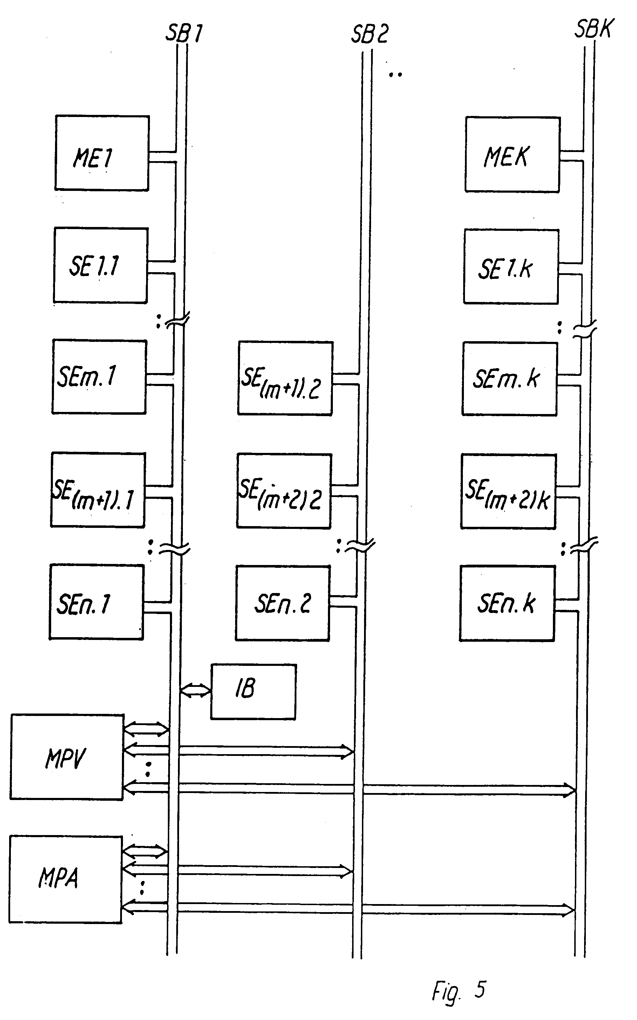

In Fig. 5 ist eine Kopplungsanordnung für mehrere Steuersysteme, von denen jedes ein eigenes, gemeinsames Bussystem SB 1 bis SB k aufweist, dargestellt. Für alle diese gemeinsamen Bussysteme SB 1 bis SB k ist lediglich eine Problemverwaltungs-Mastereinheit MPV und ebenso nur eine Problemaufbereitungs-Mastereinheit MPA vorgesehen. An jedem gemeinsamen Bussystem SB 1 bis SB k kann jeweils eine zusammen mit untergeordneten Slaveeinheiten SE 1.1 bis SE m.k Systeme bildende Problemlösungs-Mastereinheit ME 1 bis ME k, ebenso wie weitere autonome Slaveeinheiten SE (M+1).1 bis SE nk, angeschlossen sein. Je nach Bestimmung des durch ein gemeinsames Bussystem SB 1 bis SB k gebildeten Steuersystems können an diesem auch ausschließlich aus einer Problemlösungs-Mastereinheit ME 1 bis ME k mit untergeordneten Slaveeinheiten SE 1.1 bis SE mk gebildete Systeme oder ausschließlich autonome Slaveeinheiten SE (m+1).1 bis SE nk angeordnet sein.

Die Problemverwaltungs-Mastereinheit MPV steuert und überwacht in simultaner Betriebsweise die Bearbeitung der Aufgaben durch die an den gemeinsamen Bussystemen SB 1 bis SB k angeschlossenen Einheiten. In gleicher Weise werden verändernde Instruktionen von der Problemaufbereitungs-Mastereinheit MPA bearbeitet und der Problemverwaltungs-Mastereinheit MPA bereitgestellt. Jedes Steuersystem kann dabei zur Steuerung und Überwachung eines parallel zu anderen Prozessen ablaufenden Prozesses, die voneinander unabhängige Einzelprozesse oder Teilprozesse eines komplexen Ablaufes sein können, verwendet werden.

Die Erfindungskonzeption beruht zusammengefaßt wesentlich darauf, daß die Hierarchie in Richtung auf den Prozeß fallend ist. Den als Slaves arbeitenden Verarbeitungsmoduln sind als Master arbeitende Steuermodule übergeordnet.

Die Verarbeitungseinheiten SE 1 bis SE m sind Slaves der Problemlösungs-Mastereinheit ME. Die von der Problemlösungs-Mastereinheit ME mit den Verarbeitungseinheiten SE 1 bis SE m gebildeten Systeme S 1 bis S m sind wiederum Slaves der Problemverwaltungs-Mastereinheit MPV. Bei Neubelehrung sind alle diese Einheiten SE 1 bis SE m, ME (S 1 bis S m) und MPV Slaves der Problemaufbereitungs-Mastereinheit MPA und verarbeiten deren neu vorgegebene Bearbeitungsregeln.

## Patentansprüche

1. Verfahren zur hierarchischen Steuerung diskontinuierlicher Prozesse (P) zur laufenden Anpassung der inneren Informationsverarbeitung an veränderliche Prozeßbedingungen unter Verwendung von in Hierarchieebenen angeordneten Teilsystemen aus Steuermoduln (ME1 bis MEm) und in der nachgeordneten Hierarchieebene als Verarbeitungsmoduln (SE1.1 bis SEn.k) wirkenden Funktionseinheiten und zugeordneten Eingabeschnittstellen (IE1 bis IEM), **dadurch gekennzeichnet,** daß in jedem Steuermodul (ME1 bis MEm) der untersten Hierarchieebene aus Programmvorgaben und Prozeßinformationen Steuervariable, Bedingungen und Strukturinformationen ermittelt und in einem Speicher (VS1 bis VSm) abgelegt und anhand dieser Informationen Bearbeitungsanweisungen für die dem Steuermodul (ME1 bis MEm) nachgeordneten, von dem Steuermodul der nächsthöheren Hierarchieebene ausgewählten und aktivierten Verarbeitungsmoduln (SE1.1 bis SEn.k) bereitgestellt werden, und in einer Programmiersprache über ein Belehrungsinterface (IB) eingegebene, problembezogene Informationen von dem Steuermodul der höchsten Hierarchieebene aufbereitet und den Steuermoduln der ihr nachgeordneten Hierarchieebenen als Verarbeitungsregeln vorgegeben werden.

2. Verfahren nach Anspruch 1, dadurch gekennzeichnet, daß für nach unveränderten Regeln ablaufende Programmteile durch den Steuermodul der nächsthöheren Hierarchieebene Verarbeitungsmoduln mit gespeicherten Bearbeitungsprogrammen in der untersten Hierarchieebene ausgewählt und aktiviert werden.

3. Hierarchisches Steuersystem für diskontinuierliche Prozesse zur laufenden Anpassung der inneren Informationsverarbeitung an veränderliche Prozeßbedingungen, insbesondere zur Durchführung des Verfahrens nach Anspruch 1 oder 2, mit Hierarchieebenen zugeordneten Teilsystemen aus Steuermoduln (ME 1 bis ME m) und Verarbeitungsmoduln (SE 1.1 bis SE n.k) und in jeder Hierarchieebene zugeordneten Eingabeschnittstellen, dadurch gekennzeichnet, daß eine Problemverwaltungs-Mastereinheit (MPV) als weitere Hierarchieebene den aus Problemlösungs-Mastereinheit (ME) und Slaveeinheiten (SE 1 bis SE m) bestehenden Systemen (S 1 bis S m) an einem gemeinsamen Bussystem (SB) übergeordnet ist.

4. Steuersystem nach Anspruch 3, dadurch gekennzeichnet, daß die Problemverwaltungs-Mastereinheit (MPV) ein internes Bussystem (IBMPV) aufweist, über das ein interner Systemspeicher (ISS), in dem interne Bearbeitungsregeln abgelegt sind, ein interner Funktionsspeicher (IFS) zur Aufnahme aktueller Prozeßinformationen, eine interne Speicherverwaltungseinheit (ISV) und eine interne Problemverwaltungs-Operatoreinheit (IOPV) miteinander verbunden sind, und an das ein internes Interface (IMPVI) zur Verbindung mit dem gemeinsamen Bussystem angeschlossen ist.

5. Steuersystem nach Anspruch 3 oder 4, dadurch gekennzeichnet, daß die Ausgänge der Slaveeinheiten (SE 1 bis SE m) zur Kommunikation von Rückmeldeinformationen auf ein am gemeinsamen Bussystem (SB) angeschlossenes Eingabe-Interface (IE) geführt sind.

6. Steuersystem nach einem der Ansprüche 3 bis 5, dadurch gekennzeichnet, daß von der Problemlösungs-Mastereinheit (ME) unabhängig und autonom arbeitende Slaveeinheiten (SE m+1 bis SE n) am gemeinsamen Bussystem (SB) zur Auswahl und Aktivierung durch die Problemverwaltungs-Mastereinheit (MPV) angeschlossen sind, die mit ihren Ausgängen zur Kommunikation mit den Prozeßsteuermitteln (P) und für Rückmeldeinformationen mit dem Eingabeinterface (IE) verbunden sind.

7. Steuersystem nach Anspruch 6, dadurch gekennzeichnet, daß die Slaveeinheiten (SE 1 bis SE m, SE m+1 bis SE n) durch Interfaces (IS 1 bis IS m, IS m+1 bis IS n) jeweils mit einem Ein-/Ausgabetor mit den Prozeßsteuermitteln (P) und mit einem Ausgabetor über ein externes Bussystem (EB) mit dem Eingabeinterface (IB) verbunden sind.

8. Steuersystem nach einem der Ansprüche 3 bis 7, dadurch gekennzeichnet, daß an dem gemeinsamen Bussystem (SB) zusätzlich eine Problemaufbereitungs-Mastereinheit (MPA) und ein zur Eingabe einer Programmiersprache bestimmtes Belehrungs-Interface (IB) angeschlossen sind.

9. Steuersystem nach Anspruch 8, dadurch gekennzeichnet, daß in der Problemaufbereitungs-Mastereinheit (MPA) an ein internes Bussystem (IBMPA) ein interner Schreib-Lese-Speicher (ISPMPA), ein internes Interface (IMPAJ) zum Anschluß an das gemeinsame Bussystem (SB), eine Filtereinheit (IFMPA) zur Bestimmung von koordinierenden und aktionsausführenden Elementen der Grammatik der über das interne Interface (IMPAI) und das Belehrungsinterface (IB) eingebbaren Programmiersprache und eine interne Generatoreinheit (IGMPA) zur Ermittlung problembezogener Bearbeitungsanweisungen für die übrigen Einheiten des Steuersystems angeschlossen sind.

10. Steuersystem nach Anspruch 4 oder 9, dadurch gekennzeichnet, daß die Problemverwaltungs-Mastereinheit (MPV) und die Problemaufbereitungs-Mastereinheit (MPA) jeweils mit den gemeinsamen Bussystemen (SB 1 bis SB n) mehrerer Steuersysteme (IMPAJ) gegenseitig entkoppelt verbunden sind.

## Claims

1. Method for the hierarchical control of discontinuous processes (P) for the steady adaptation of the internal information processing to variable process conditions with the use of partial systems of control modules (ME1 to MEm), arranged in hierarchical planes, and function units operating in the subsequently arranged hierarchical plane as processing modules (SE1.1 to SEn.k) and associated input intersections (IE1 to IEM), characterized in that control variable, conditions and structure information are determined in each control module (ME1 to MEm) of the lowest hierarchical plane of program specifications and process information and are deposited in a memory (VS1 to VSm) and with the aid of this information, working instructions for the processing modules (SE1.1 to SEn.k), arranged after the control module (ME1 to MEm), selected by the control module of the next highest hierarchical plane and activated, are prepared, and problem-related information entered in a programming language by way of a teaching interface (IB) is prepared by the control module of the highest hierarchical plane and is specified for the control modules of the hierarchical planes arranged after it as processing rules.

2. Method according to claim 1, characterized in that for program parts occurring according to unaltered rules, through the control module of the next highest hierarchical plane, processing modules with stored working programs in the lowest hierarchical plane are selected and activated.

3. Hierarchical control system for discontinuous processes for the steady adaptation of the internal information processing on variable process conditions, in particular for carrying out the method according to claim 1 or 2, with partial systems, associated with hierarchical planes, of control modules (ME 1 to ME m) and processing modules (SE 1.1 to SE n.k) and input intersections allocated in each hierarchical plane, characterized in that a problem-management master unit (MPV) as further hierarchical plane is arranged over the systems (S 1 to S m) comprising problem-solution master unit (ME) and slave units (SE 1 to SE m) on a common bus system (SB).

4. Control system according to claim 3, characterized in that the problem-management master unit (MPV) has an internal bus system (IBMPV), by way of which there are connected to one another an internal system memory (ISS), in which internal working rules are deposited, an internal function memory (IFS) for the incorporation of actual process information, an internal memory-management unit (ISV) and an internal problem-management operator unit (IOPV), and to which there is connected an internal interface (IMPVI) for connection with the common bus system.

5. Control system according to claim 3 or 4, characterized in that the outputs of the slave units (SE 1 to SE m) for the communication of reply information are guided to an input interface (IE) connected to the common bus system (SB).

6. Control system according to one of claims 3 to 5, characterized in that slave units (SE m+1 to SE n), operating independently of the problem-solution master unit (ME) and autonomously, are connected to the common bus system (SB) for selection and activation through the problem-management master unit (MPV), which are connected by their outputs for communication with the process control means (P) and for reply information with the input interface (IE).

7. Control system according to claim 6, characterized in that the slave units (SE 1 to SE m, SE m+1 to SE n) through interfaces (IS 1 to IS m, IS m+1 to IS n) are in each case connected by an input/output gate to the process control means (P) and by an output gate by way of an external bus system (EB) to the input interface (IB).

8. Control system according to one of claims 3 to 7, characterized in that there are connected to the common bus system (SB) additionally a problem-preparation master unit (MPA) and a teaching interface (IB) intended for the input of a programming language.

9. Control system according to claim 8, characterized in that in the problem-preparation master unit (MPA) there are connected to an internal bus system (IBMPA) an internal read/write memory (ISPMPA), an internal interface (IMPAJ) for connection to the common bus system (SB), a filter unit (IFMPA) for the determination of coordinating and action-executing elements of the grammar of the programming language which can be entered by way of the internal interface (IMPAI) and the teaching interface (IB) and an internal generator unit (IGMPA) for the determination of problem-related working instructions for the remaining units of the control system.

10. Control system according to claim 4 or 9, characterized in that the problem-management master unit (MPV) and the problem-preparation master unit (MPA) are in each case connected in a mutually decoupled manner to the common bus systems (SB 1 to SB n) of several control systems (IMPAJ).

## Revendications

1. Procédé de commande hiérarchisée de processus discontinus (P) pour l'adaptation permanente du traitement interne d'informations à des conditions variables de processus, moyennant l'utilisation de systèmes partiels, disposés dans des plans hiérarchiques et constitués par des modules de commande (ME1 à MEm) et d'unités fonctionnelles, agissant en tant que modules de traitement (SE1.1 à SEn.k) dans le plan hiérarchique aval, et d'interfaces d'entrée (IE1 à IEM) associées, caractérisé par le fait que dans chaque module de commande (ME1 à MEm) du plan hiérarchique le plus bas, des variables de commande, des conditions et des informations de structure sont déterminées à partir de prescriptions de programme et d'informations de processus et sont mémorisées dans une mémoire (VS1 à VSm), et des instructions de traitement sont préparées, à partir de ces informations, pour les modules de traitement (SE1.1 à SEn.k), qui sont disposés en aval du module de commande (ME1 à MEm), et sont sélectionnés et activés par le module de commande du plan hiérarchique immédiatement supérieur, et que des informations liées au problème et introduites dans un langage de programmation par l'intermédiaire d'une interface donneur d'instructions (IB), sont préparées par le module de commande du plan hiérarchique le plus élevé et sont prédéterminées en tant que règles de traitement pour les modules de commande des plans hiérarchiques situés au-dessous du plan hiérarchique le plus élevé.

2. Procédé suivant la revendication 1, caractérisé par le fait que pour des parties de programme qui se déroulent selon des règles inchangées, des modules de traitement, dans lesquels sont mémorisés des programmes de traitement et qui sont situés dans le plan hiérarchique le plus bas, sont sélectionnés et activés au moyen des modules du plan hiérarchique de rang le plus élevé.

3. Système de commande hiérarchique pour des processus discontinus, pour l'adaptation continue du traitement interne de l'information à des conditions variables d'un processus, notamment pour la mise en oeuvre du procédé suivant la revendication 1 ou 2, comportant des systèmes partiels associés à des plans hiérarchiques et constitués par des modules de commande (ME 1 à ME m) et des modules de traitement (SE 1.1 à SE n.k) et des interfaces d'entrée associées dans chaque plan hiérarchique, caractérisé par le fait qu'une unité maître (MPV) de gestion des problèmes est superposée, en tant qu'autre plan hiérarchique, aux systèmes (S 1 à S m), qui sont constitués par l'unité maître (ME) de résolution des problèmes et des unités (SE 1 à SE m), dans un système de bus commun (SB).

4. Système de commande suivant la revendication 3, caractérisé par le fait que l'unité maître (MPV) de gestion des problèmes comporte un système de bus interne (IBMPV), au moyen duquel une mémoire système interne (ISS), dans laquelle sont mémorisées des règles internes de traitement, une mémoire interne de fonctions (IFS) pour la réception d'informations actuelles du processus, une unité interne (ISB) de gestion de mémoires et une unité opérationnelle interne (IOPV) de gestion des problèmes sont reliées entre elles et auxquelles est raccordée une interface (IMPVI) prévue pour la liaison avec le système de bus commun.

5. Système de commande suivant la revendication 3 ou 4, caractérisé par le fait que les sorties des unités esclaves (SE 1 à SE m) sont reliées, pour la communication d'informations de signalisation en retour, à une interface d'entrée (IE) raccordée à un système de bus commun (SB).

6. Système de commande suivant l'une des revendications 3 à 5, caractérisé par le fait que des unités esclaves (SE m+1 à SE n), qui travaillent de façon autonome indépendamment de l'unité maître (ME) de résolution des problèmes et qui sont reliées par leurs sorties aux moyens de commande de processus (P) pour la communication et à l'interface d'entrée (IE), pour les informations de signalisation en retour, sont raccordées au système de bus commun (SB) pour la sélection et l'activation par l'unité maître (MPV) de gestion des problèmes.

7. Système de commande suivant la revendication 6, caractérisé par le fait que les unités esclaves (SE 1 à SE m, SE m+1 à SE n) sont reliées par des interfaces (IS 1 à IS m, IS m+1 à IS n) respectivement par une porte d'entrée/sortie aux moyens de commande de processus (P) et par une porte de sortie, par l'intermédiaire d'un système de bus externe (EB), à l'interface d'entrée (IB).

8. Système de commande suivant l'une des revendications 3 à 7, caractérisé par le fait qu'en outre une unité maître (MPA) de préparation des problèmes et une interface d'apprentissage (IB), utilisée pour introduire un langage de programmation, sont raccordées en supplément au système de bus commun (SB).

9. Système de commande suivant la revendication 8, caractérisé par le fait que dans l'unité maître (MPA) de préparation des problèmes, une mémoire interne d'enregistrement-lecture (ISPMPA), une interface interne (IMPAJ) pour le raccordement au système de bus commun (SB), une unité de filtre (IFMPA) pour la détermination d'éléments, qui assurent une coordination et exécutent des actions, de la grammaire du langage de programmation pouvant être introduit par l'intermédiaire de l'interface interne (IMPAI) et de l'interface donner d'instructions (IB), et une unité formant générateur interne (IGMPA) pour déterminer des indications de traitement, liées au problème, pour les autres unités du système de commande, sont raccordées à un système de bus interne (IBMPA), dans l'unité maître (MPA) de préparation des problèmes.

10. Système de commande suivant la revendication 4 ou 9, caractérisé par le fait que l'unité maître (MPV) de gestion des problèmes et l'unité maître (MPA) de préparation des problèmes sont reliées, en étant réciproquement découplées, respectivement aux systèmes de bus commun (SB 1 à SB n) de plusieurs systèmes de commande (IMPAJ).
